# DEMANDE DE BREVET EUROPEEN

(11) **EP 2 085 289 A2**
(43) Date de publication de la demande: **05.08.2009**
(21) Numéro de dépôt: 09151173.3
(22) Date de dépôt: 23.01.2009
(51) Int. Cl.: B62B 7/08

(54) **Châssis pliable pour poussette d'enfant**

(30) Priorité: 01.02.2008 ES 200800200 U
(71) Demandeur: BÉBÉCAR - Utilidades para Criança, S.A., 4509-903 Caldas de S. Jorge (PT)
(72) Inventeur: Santos, Emanuel, 4509-903 Caldas de S. Jorge (PT); Ferreira, Valdemar, 4520-615 S. João de Ver (PT)
(74) Mandataire: Besnard, Christophe Laurent

(57) **Abrégé**

Châssis pliable pour poussette d'enfant comprenant :
- deux montants avant (1) portant chacun à leur extrémité inférieure au moins une roue avant (2) ;
- deux montants arrière (4) portant chacun à leur extrémité inférieure au moins une roue arrière (5) ;
- deux bras-poussoirs (7), chaque bras-poussoir (7) étant monté de façon à coulisser sur un desdits montants avant (1) par le biais d'une pièce intermédiaire (8) qui présente au moins une partie de coulissement (8a, 8b) entourant le bras-poussoir (7) en permettant le coulissement du bras-poussoir (7) par rapport au montant avant (1), cette partie de coulissement (8a, 8b) étant munie d'au moins un roulement (11) de manière à réduire les frottements entre la pièce intermédiaire (8) et le bras-poussoir (7).

## Description

La présente invention concerne un châssis pliable destiné à tout type de poussette pour enfant, y compris pour bébé.

La présente invention concerne le domaine des châssis destinés aux poussettes pour enfant, et en particulier des châssis connus sous le nom de « châssis télescopiques » ou de « châssis à pliage télescopique », différents des châssis « à pliage cassé » existants.

Dans un châssis à pliage cassé, les bras-poussoirs sont, en position ouverte ou dépliée, sensiblement dans le prolongement des montants avant et, au moment de la fermeture, oscillent par rapport à ces derniers. Cette oscillation des bras-poussoirs s'effectue vers le bas ou vers le haut afin que l'extrémité supérieure des bras-poussoirs s'approche des roues arrière ou des roues avant du châssis.

Les châssis à pliage télescopique se caractérisent, notamment, par le fait qu'ils peuvent rester à la verticale une fois repliés. On connaît différentes techniques permettant de replier les châssis télescopiques: en doublant les roues avant de façon à ce que les roues arrières puissent passer entre les roues avant lorsque le châssis est replié, ou en étendant l'axe arrière afin que la distance entre les roues arrière soit plus grandes que celle entre les roues avant et que les roues arrière encadrent les roues avant lorsque le châssis est replié.

Dans les châssis à pliage télescopique, l'ouverture et la fermeture (i.e. le dépliage et le pliage) du châssis se fait par coulissement des bras-poussoirs par rapport aux montants avant du châssis.

Un système de coulissement connu comprend un rail disposé entre un bras-poussoir et le montant avant correspondant, ce système laissant la partie supérieure, ou partie visible, du bras-poussoir sans aucun contact.

Une autre solution connue consiste à utiliser une pièce intermédiaire entre le bras-poussoir et le montant avant permettant le coulissement du bras-poussoir par rapport au montant avant. Cependant, cette dernière solution est considérée comme insatisfaisante car le bras-poussoir, en coulissant, frotte trop contre les parois intérieures de la pièce intermédiaire, ce qui rend difficile l'ouverture et la fermeture du châssis et peut provoquer des éraflures sur la peinture et/ou le vernis qui recouvrent le bras-poussoir, ce dernier étant souvent un tube métallique peint et/ou verni. En outre, ces frottements peuvent entraîner une usure prématurée des pièces en présence.

L'invention a pour but de limiter les inconvénients précités.

L'invention a pour objet un châssis pliable pour poussette d'enfant comprenant :
- deux montants avant portant chacun à leur extrémité inférieure au moins une roue avant ;
- deux montants arrière portant chacun à leur extrémité inférieure au moins une roue arrière ;
- deux bras-poussoirs, chaque bras-poussoir étant monté de façon à coulisser sur un desdits montants avant par le biais d'une pièce intermédiaire qui présente au moins une partie de coulissement enserrant le bras-poussoir en autorisant le coulissement du bras-poussoir par rapport au montant avant, cette partie de coulissement étant munie d'au moins un roulement de manière à réduire les frottements entre la pièce intermédiaire et le bras-poussoir.

Grâce audit roulement, le risque d'éraflure est limité et le mouvement (relèvement et abaissement) du bras-poussoir est facilité.

Ladite pièce intermédiaire et sa partie de coulissement peuvent adopter différentes formes.

Selon un mode de réalisation, ledit roulement est monté sur ladite partie de coulissement en étant libre en rotation autour d'un axe perpendiculaire à la direction de déplacement du bras-poussoir et porté par la partie de coulissement.

Selon un mode de réalisation, ledit roulement a une forme générale de diabolo. Cette forme de diabolo garantit un bon guidage en coulissement du bras-poussoir qui, généralement, présente une section circulaire ou ovale.

Selon un mode de réalisation, ladite partie de coulissement recouvre la face supérieure du bras-poussoir et ledit roulement est situé entre la partie de coulissement et la face supérieure du bras-poussoir.

Selon un mode de réalisation, ladite partie de coulissement est munie de deux roulements, ces roulements étant dans des positions opposées par rapport au bras-poussoir.

Selon un mode de réalisation, ces deux roulements sont situés respectivement entre la partie de coulissement et la face supérieure du bras-poussoir, et entre la partie de coulissement et la face inférieure du bras-poussoir.

Selon un mode de réalisation, la pièce intermédiaire située entre un bras-poussoir et le montant avant correspondant présente deux parties de coulissement distantes l'une de l'autre suivant la direction de déplacement du bras poussoir.

Selon un mode de réalisation, le châssis comprend un guidon qui relie les bras-poussoirs entre eux et qui est articulé par rapport auxdits bras-poussoirs, de façon à pouvoir se déplacer en direction des roues arrière dans la position repliée du châssis.

Selon un mode de réalisation, les roues avant sont montées sur un système de suspension.

Selon un mode de réalisation, les roues arrière sont montées sur un système de suspension.

Selon un mode de réalisation, le châssis possède une barre d'accouplement articulée par rapport à chaque bras-poussoir et à chaque montant arrière, configurée de façon à tourner autour d'un axe de rotation supporté par le bras-poussoir et situé dans la partie inférieure de ce dernier, et autour d'un axe de rotation supporté par le montant arrière et situé dans la partie intermédiaire de ce dernier, à distance de son extrémité inférieure, de façon que, lorsque le bras-poussoir coulisse sur le montant avant sur lequel il est monté, ladite barre d'accouplement entraîne la rotation du montant arrière par rapport au montant avant.

Selon un mode de réalisation :
- chaque barre d'accouplement présente une extrémité s'étendant au delà du montant arrière,
- chaque système de suspension de roue arrière est monté de façon à coulisser sur le montant arrière,
- le châssis comprend, de plus, deux pièces de traction, qui sont chacune articulées avec ladite extrémité de chaque barre et ledit système de suspension, afin que la rotation du montant arrière par rapport au montant avant entraîne le coulissement du système de suspension par rapport au montant arrière.

Lors du pliage d'un tel châssis, le montant arrière coulisse par rapport au montant avant en s'approchant de celui-ci et la barre d'accouplement tourne par rapport au montant arrière de façon à ce que ladite extrémité s'éloigne de l'extrémité inférieure du montant arrière.

Selon un mode de réalisation, le châssis comprend :
- deux montants avant qui portent chacun, à leur extrémité inférieure, au moins une roue avant ;
- deux montants arrières, qui portent chacun, à leur extrémité inférieure, au moins une roue arrière, qui est montée sur un système de suspension, lesdits montants arrières étant articulés par rapport aux deux montants avant ;
- deux bras-poussoirs montés de manière respective sur les deux montants avant et qui coulissent par rapport aux deux montants avant ;
- deux barres d'accouplement articulées par rapport à un bras-poussoir et à un montant arrière, de façon à ce que le coulissement du bras-poussoir par rapport au montant avant sur lequel il est monté entraîne la rotation du montant arrière par rapport au montant avant.

Dans un châssis télescopique de ce type, en position dépliée ou ouverte, chaque bras-poussoir est situé sensiblement dans le prolongement du montant avant correspondant, et, en position repliée ou fermée, le bras-poussoir et le montant avant sont placés côte à côte.

Généralement, un châssis télescopique reste droit en position repliée (en reposant sur les roues avant et sur les bras-poussoirs).

Les caractéristiques et avantages de l'invention seront encore mieux compris à la lecture de la description détaillée qui suit, d'un exemple de réalisation de l'invention donné à titre illustratif et non limitatif. Cette description fait référence aux figures annexées.

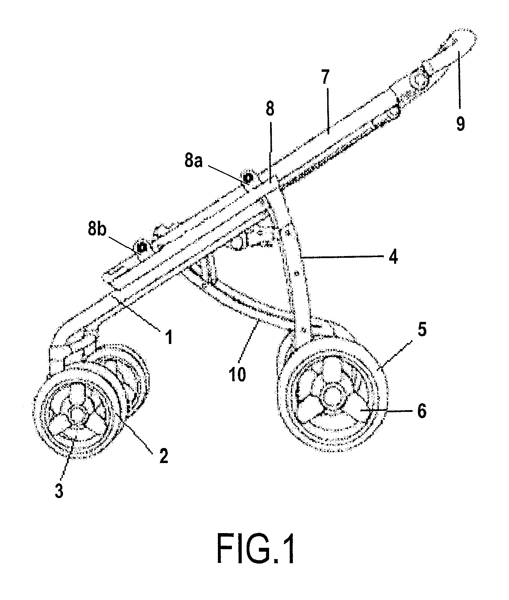

La figure 1 illustre un exemple de châssis pliable selon l'invention, en position ouverte et vu de côté.

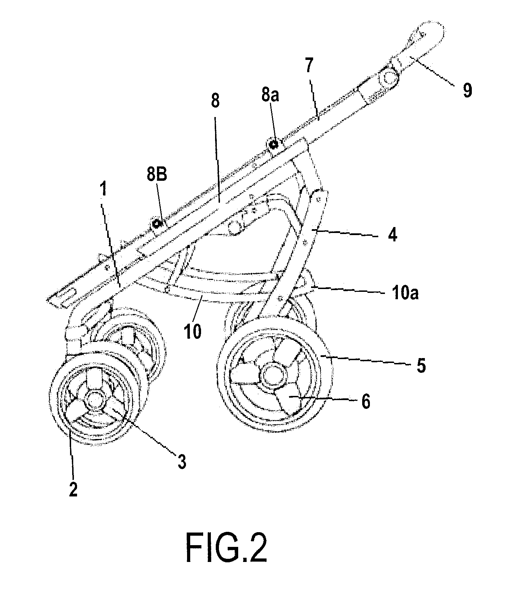

La figure 2 illustre le châssis pliable de la figure 1 en position intermédiaire entre sa position ouverte et sa position fermée.
La figure 3 illustre le châssis pliable de la figure 1, en position fermée.
La figure 4 est une vue en perspective de la pièce intermédiaire avec les roulements intégrés.
La figure 5 est une vue en coupe de la pièce intermédiaire avec les roulements intégrés.

Sur ces figures, il est représenté un châssis pliable qui comprend deux montants avant (1) qui portent chacun, à leur extrémité inférieure, une roue avant (2) qui est montée sur un système de suspension (3). De plus, ledit châssis comprend également deux montants arrière (4) qui entraînent chacun, à leur extrémité inférieure, une roue arrière (5) montée sur un système de suspension (6). Le châssis est complété par deux bras-poussoirs (7) montés de façon à coulisser sur les montants avant (1) par le biais de pièces intermédiaires (8). Le châssis comprend aussi un guidon (9) qui relie les deux bras-poussoirs (7) entre eux.

Chaque montant arrière (4) est articulé par rapport au montant avant (1), au niveau d'une partie d'articulation (12) solidaire de la pièce intermédiaire (8) et du montant avant (1), et est monté de façon à tourner autour d'un axe de rotation supporté par la partie d'articulation (12).

Chaque barre d'accouplement (10) est articulée par rapport à un bras-poussoir (7) et à un montant arrière (4) et est montée de façon à tourner autour d'un axe de rotation supporté par le bras-poussoir (7) et situé dans la partie inférieure de ce dernier, et d'un axe de rotation supporté par le montant arrière (4) et situé dans la partie intermédiaire de celui-ci, à distance de son extrémité inférieure. Ainsi, lorsque le bras-poussoir (7) coulisse sur le montant avant (1) sur lequel il est monté, cela entraîne une rotation du montant arrière (4) par rapport au montant avant (1), grâce à la barre d'accouplement (10).

Chaque barre d'accouplement (10) présente une partie d'extrémité (10a) qui s'étend au delà du montant arrière (4). Au moment du pliage du châssis, la rotation du montant arrière (4) par rapport au montant avant (1) entraîne un coulissement régulier et simple des bras-poussoirs (7) sur la pièce intermédiaire (8) grâce aux roulements (11), facilitant ainsi le pliage.

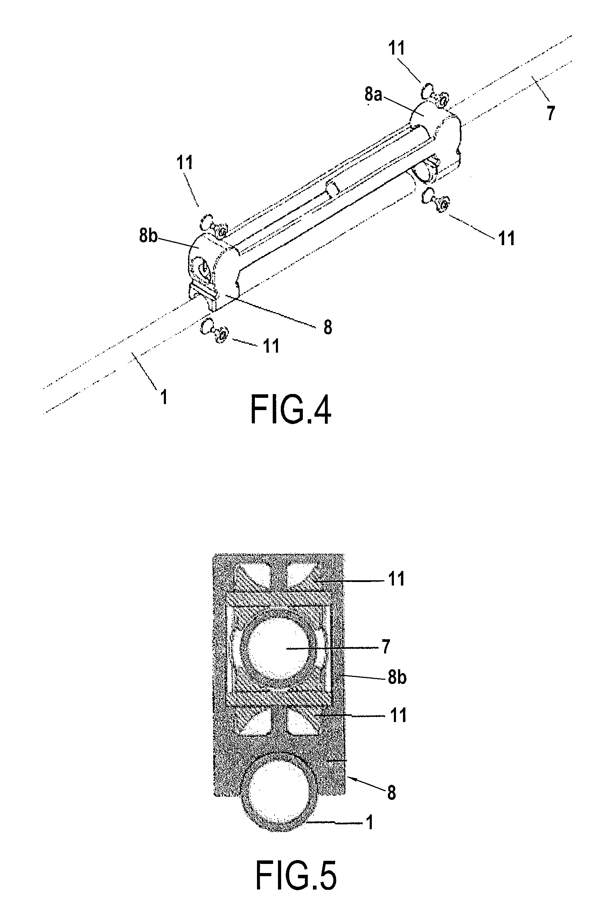

La partie intermédiaire (8) est représentée en détail sur les figures 4 et 5, elle présente deux parties de coulissement (8a et 8b). Chaque partie de coulissement (8a, 8b) entoure le bras-poussoir (7) en ce sens qu'elle recouvre la face supérieure du bras-poussoir (7). Deux roulements (11) sont intégrés dans chacune des partie de coulissement (8a, 8b), ils sont libres en rotation autour d'un axe perpendiculaire à la direction de déplacement du bras-poussoir (7), cet axe étant porté par la partie de coulissement (8a, 8b). Ces roulements (11) sont dans des positions opposées par rapport au bras-poussoir (7). Ainsi, un roulement (11) est situé entre ladite partie de coulissement (8a, 8b) et la face supérieure du bras-poussoir (7), et l'autre roulement (11) est situé entre ladite partie de coulissement (8a, 8b) et la face inférieure du bras-poussoir (7), comme représenté sur la figure 5.

Ces deux roulements (11) ont une forme générale de diabolo et un profil extérieur complémentaire, respectivement, de la face supérieur et de la face inférieur du bras-poussoir (7). Ainsi, le guidage du bras-poussoir (7) lors du coulissement est parfaitement assuré.

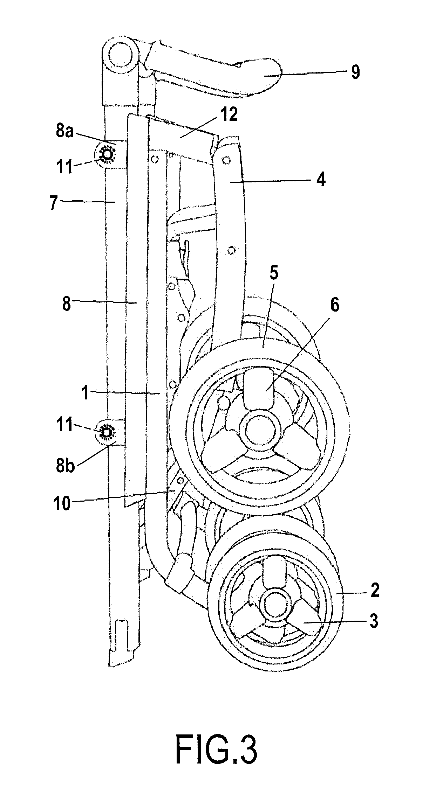

Le guidon (9) est articulé par rapport aux bras-poussoirs (7) et est monté de façon à tourner autour d'un axe de rotation supporté par les bras-poussoirs (7), au niveau de leurs extrémités supérieures. Afin de réduire la taille du châssis, au sens de son extension, il est possible de replier le guidon (9) dans la direction du montant arrière (4), comme cela est illustré sur la figure 3.

Lors du dépliage du châssis, la rotation du montant arrière (4) par rapport au montant avant (1) entraîne le fait que les bras-poussoirs (7) coulissent avec facilité sur la pièce intermédiaire (8), facilitant l'ouverture du châssis.

Enfin, grâce à la pièce intermédiaire (8), le pliage et le dépliage du châssis télescopiques sont considérablement facilités, les éraflures sur la peinture ou le vernis des bras-poussoirs (7) étant évitées.

## Revendications

1. Châssis pliable pour poussette d'enfant comprenant :
- deux montants avant (1) portant chacun à leur extrémité inférieure au moins une roue avant (2) ;
- deux montants arrière (4) portant chacun à leur extrémité inférieure au moins une roue arrière (5) ;
- deux bras-poussoirs (7), chaque bras-poussoir (7) étant monté de façon à coulisser sur un desdits montants avant (1) par le biais d'une pièce intermédiaire (8),
ce châssis étant **caractérisé en ce que** ladite pièce intermédiaire (8) présente au moins une partie de coulissement (8a, 8b) enserrant le bras-poussoir (7) en permettant le coulissement du bras-poussoir (7) par rapport au montant avant (1), et **en ce que** cette partie de coulissement (8a, 8b) est munie d'au moins un roulement (11) de manière à réduire les frottements entre la pièce intermédiaire (8) et le bras-poussoir (7).

2. Châssis pliable selon la revendication 1, comprenant un guidon (9) qui relie les bras-poussoirs (7) entre eux et qui est articulé par rapport auxdits bras-poussoirs (7), de façon à pouvoir se déplacer en direction des roues arrières (5) dans la position repliée du châssis.

3. Châssis pliable selon la revendication 1 ou 2, dans lequel les roues avant (2) sont montées sur un système de suspension (3).

4. Châssis pliable selon l'une quelconque des revendications 1 à 3, dans lequel les roues arrière (5) sont montées sur un système de suspension (6).

5. Châssis pliable selon l'une quelconque des revendications 1 à 4, comprenant une barre d'accouplement (10) articulée par rapport à chaque bras-poussoir (7) et à chaque montant arrière (4), configurée de façon à tourner autour d'un axe de rotation supporté par le bras-poussoir (7) et situé dans la partie inférieure de ce dernier, et un axe de rotation supporté par le montant arrière (4) et situé dans la partie intermédiaire de ce dernier, à distance de son extrémité inférieure, de sorte que, lorsque le bras-poussoir (7) coulisse sur le montant avant (1) sur lequel il est monté, ladite barre d'accouplement (10) entraîne le montant arrière en rotation par rapport au montant avant (1).

6. Châssis pliable selon l'une quelconque des revendications 1 à 5, dans lequel ledit roulement (11) est monté sur ladite partie de coulissement (8a, 8b) en étant libre en rotation autour d'un axe perpendiculaire à la direction de déplacement du bras-poussoir (7), cet axe étant porté par la partie de coulissement (8a, 8b).

7. Châssis pliable selon la revendication 6, dans lequel ledit roulement (11) a une forme générale de diabolo.

8. Châssis pliable selon l'une quelconque des revendications 1 à 7, dans lequel ladite partie de coulissement (8a, 8b) recouvre la face supérieure du bras-poussoir (7) et dans lequel ledit roulement (11) est situé entre cette partie de coulissement (8a, 8b) et la face supérieure du bras-poussoir (7).

9. Châssis pliable selon l'une quelconque des revendications 1 à 8, dans lequel ladite partie de coulissement (8a, 8b) est munie de deux roulements (11), ces roulements (11) étant dans des positions opposées par rapport au bras-poussoir (7).

10. Châssis pliable selon la revendication 9, dans lequel les deux roulements (11) sont situés respectivement entre ladite partie de coulissement (8a, 8b) et la face supérieure du bras-poussoir (7), et entre ladite partie de coulissement (8a, 8b) et la face inférieure du bras-poussoir (7).

11. Châssis pliable selon l'une quelconque des revendications 1 à 10, dans lequel la pièce intermédiaire (8) située entre un bras-poussoir (7) et le montant avant (1) correspondant présente deux parties de coulissement (8a, 8b).

12. Poussette d'enfant comprenant un châssis pliable selon l'une quelconque des revendications précédentes.
